# EUROPEAN PATENT APPLICATION

(11) **EP 1 649 944 A1**
(43) Date of publication of application: **26.04.2006**
(21) Application number: 03817651.7
(22) Date of filing: 28.07.2003
(51) Int. Cl.: B09B 3/00, C08J 11/12, F27D 19/00

(54) **HARMFUL SUBSTANCE-PROCESSING APPARATUS**

(71) Applicant: Kagawa University, Takamatsu-shi, Kagawa 760-0016 (JP); Olympus New Century, Ltd., Tokyo 103-0004 (JP)
(72) Inventor: KAKEGAWA, Hisao, Tokushima-shi, Tokushima 770-0852 (JP); SUENAGA, Yoshihiro, Kita-gun, Kagawa 761-0121 (JP); KAKINUMA, Syuzo, Matsudo-shi, Chiba 270-2221 (JP)
(74) Representative: Geyer, Ulrich F.
(86) International application number: PCT/JP2003/009559
(87) International publication number: WO 2005/009636

(57) **Abstract**

This invention provides toxic-substance treatment equipment which treats toxic substances efficiently by decomposing them completely. The toxic-substance treatment equipment 1 comprises (i) a heating container 10 which has a heating chamber to hold waste containing toxic substances, (ii) a pressure-reducing means 40 which sucks air out of the heating chamber to reduce the pressure in the heating chamber, and (iii) a heating means 20 which heats the inside of the heating chamber. The heating container 10 is cylindrical. The heating means 20 includes a plurality of heating units 21 and 25 disposed longitudinally of the heating container 10 and a controller 30 to control the order of operation of the heating units 21 and 25. There is no low-temperature area in the heating chamber where vaporized toxic substances may survive the decomposition.

## Description

### Technical Field

This invention relates to toxic-substance treatment equipment.

Dioxin is highly toxic, and a very small quantity of it has acute lethal toxicity and carcinogenicity. Besides, dioxin acts as an environmental hormone, too, and it is feared that dioxin affects the procreative power of the human race and animals.

Dioxin is contained in polychlorinated biphenyl (PCB) which has been used in large quantities as insulating oil of transformers and capacitors. Dioxin is produced when waste containing plastic (for example, polyethylene, polypropylene, polystyrene) and organochlorine chemicals (for example, polyvinyl chloride) is incinerated in an oxygenic atmosphere at waste-treatment facilities.

There have recently been occurring problems that insulating oil leaks from waste such as junked transformers and capacitors and PCB contained in it contaminates soil. Besides, there have recently been occurring problems that dioxin, together with ash and smoke, is discharged from waste-treatment facilities and contaminates soil around them. Dioxin is highly chemically stable and continues to exist in contaminated soil semipermanently. If crops such as vegetables are grown on contaminated soil, dioxin in the contaminated soil contaminates the crops and accumulates in the organisms which eat the contaminated crops.

To solve the above problems, it is hoped that a method of incinerating waste containing plastic, organochlorine chemicals, etc. without producing dioxin and a method of decomposing dioxin in contaminated soil and PCB will be developed.

The present invention relates to toxic-substance treatment equipment which decomposes dioxin and treats plastic, organochlorine chemicals, etc. without producing dioxin.

### Background Art

If plastics are incinerated in an oxygenic atmosphere, dioxin frameworks are produced by the oxidative reaction of oxygenic atoms. If organochlorine chemicals are incinerate in an oxygenic atmosphere, chloric radicals are produced. If dioxin frameworks and chloric radicals are produced simultaneously, chlorine joins dioxin frameworks to produce dioxin.

On the other hand, it is known that if plastic, organochlorine chemicals, etc. are heated in an atmosphere of a low density of oxygen, dioxin is not produced because the oxidative reaction necessary for the production of dioxin frameworks is checked completely by the reducing action of hydrogen atoms produced when plastic, organochlorine chemicals, etc. are decomposed.

Under the circumstances, the art of decomposing plastic, organochlorine chemicals, etc. without producing dioxin by heating them in an atmosphere of a low density of oxygen is disclosed in the Japanese Unexamined Patent Publication Nos. 1995-313951 and 2003-94033.

Disclosed in the Japanese Unexamined Patent Publication No. 1995-313951 is a method of decomposing waste such as garbage, paper diapers, etc. by putting them in an airtight container, reducing the pressure in the airtight container, and heating them. With this method, dioxin is not produced because the density of oxygen in the airtight container is low.

Disclosed in the Japanese Unexamined Patent Publication No. 2003-94033 is a system to convey polluted soil into a heating furnace of reduced pressure and high temperaure continuously by a conveyor belt and heat-treat the polluted soil. With this system, polluted soil is purified by vaporizing toxic substances in the polluted soil and thereby removing the toxic substances from the polluted soil.

The airtight container of the Japanese Unexamined Patent Publication Nos. 1995-313951 is of heat-insulating construction to keep the temperature in it high while waste is heat-treated in it. After waste is heat-treated in the airtight container, the inside of the airtight container has to be cooled down to a certain temperature to take out the treated waste out of it. Because of its heat-insulating construction, however, the airtight container takes a long time to be cooled down, prolonging its waste-treating cycle and reducing its waste-treating efficiency.

The temperature in the neighborhood of the lid of the heating furnace of the Japanese Unexamined Patent Publication No. 2003-94033 has to be kept relatively low in order to maintain the airtightness of the lid while waste is heat-treated in the heating furnace; accordingly, it is likely that vaporized toxic substances in the neighborhood of the lid will survive the decomposition.

### Disclosure of Invention

Accordingly, the object of the present invention is to provide toxic-substance treatment equipment which treats toxic substances efficiently by decomposing them completely.

According to the first feature of the present invention, there is provided toxic-substance treatment equipment which comprises (i) a heating container which has a heating chamber to hold waste containing toxic substances, (ii) a pressure-reducing means which sucks air out of the heating chamber to reduce the pressure in the heating chamber, and (iii) a heating means which heats the inside of the heating chamber. The heating container is cylindrical. The heating means includes a plurality of heating units disposed longitudinally of the heating container and a controller to control the order of operation of the heating units.

The advantage offered by the first feature of the present invention is as follows. Because the order of operation of the heating units can be controlled by the controller, waste can be treated under optimum conditions. If the controller controls the heating units so that the heating of the end portions of the heating chamber, which take a relatively long time to heat, will be started before the heating of the middle section of the heating chambers is started, the temperature difference between the middle section and the end portions when the heating of waste is started can be reduced. Accordingly, there will be no low-temperature area in the heating chamber where vaporized toxic substances are liable to survive the decomposition.

According to the second feature of the present invention, there is provided the toxic-substance treatment equipment according to the first feature. The heating container of the toxic-substance treatment equipment includes (i) a main treating section wherein waste to be treated is put, (ii) a front auxiliary treating section which is disposed in front of the main treating section, and (iii) a rear auxiliary treating section which is disposed in the rear of the main treating section. The heating means includes (i) a main heating unit to heat the main treating section, (ii) a front auxiliary heating unit to heat the front auxiliary treating section, and (iii) a rear auxiliary heating unit to heat the rear auxiliary treating section.

The advantage offered by the second feature of the present invention is as follows. If the front and rear auxiliary heating units start to heat the front and rear auxiliary treating sections before the main heating unit starts to heat the main treating section, the main treating section and the front and rear auxiliary treating sections can be heated to a certain temperature simultaneously. Therefore, if vaporized toxic substances flow from the main treating section into the front and rear auxiliary treating sections, they cannot survive the decomposition in the front and rear auxiliary treating sections. Thus, the toxic-substance treatment equipment treats toxic substances efficiently.

According to the third feature of the present invention, there is provided the toxic-substance treatment equipment according to the first feature. The heating means of the toxic-substance treatment equipment (i) is cylindrical and fitted onto the outside of the cylindrical heating container, (ii) includes a plurality of cylindrical heaters and a plurality of cylindrical heat insulators, the insides of the cylindrical heaters being in contact with the outside of the cylindrical heating container, the outsides of the cylindrical heaters being covered by the cylindrical heat insulators, and (iii) is separable from the cylindrical heating container.

The advantage offered by the third feature of the present invention is as follows. When the heating means is fitted onto the outside of the heating container, the heaters heat the heating container directly. Besides, as the heaters are covered by the heat insulators, the heaters heat the heating container efficiently. Moreover, when the heating means is removed from the heating container, the heating container is exposed to the open air and, hence, cooled in a relatively short time. Thus, the waste-treating cycle of the toxic-substance treatment equipment is relatively short and, hence, the efficiency of treatment of the toxic-substance treatment equipment is relatively high.

According to the fourth feature of the present invention, there is provided toxic-substance treatment equipment, which comprises (i) a heating container which has a heating chamber to hold waste containing toxic substances, (ii) a pressure-reducing means which sucks air out of the heating chamber to reduce the pressure in the heating chamber, and (iii) a heating means which heats the inside of the heating chamber. The heating means (i) is fitted onto the outside of the heating container, (ii) includes at least one heater and at least one heat insulator, the inside of said at least one heater being in contact with the outside of the heating container, the outside of said at least one heater being covered by said at least one heat insulator, and (iii) is separable from the heating container.

The advantage offered by the fourth feature of the present invention is as follows. When the heating means is fitted onto the outside of the heating container, said at least one heater heats the heating container directly. Besides, because said at least one heater is covered by said at least one heat insulator, said at least one heater heats the heating container efficiently. Moreover, when the heating means is removed from the heating container, the heating container is exposed to the open air and, hence, cooled efficiently in a relatively short time. Thus, the waste-treating cycle of the toxic-substance treatment equipment is relatively short and, hence, the efficiency of treatment of the toxic-substance treatment equipment is relatively high.

According to the fifth feature of the present invention, there is provided the toxic-substance treatment equipment according to the fourth feature. The heating container of the toxic-substance treatment equipment is cylindrical. The heating means of the toxic-substance treatment equipment includes a plurality of heating units disposed longitudinally of the heating container and a controller to control the order of operation of the heating units.

The advantage offered by the fifth feature of the present invention is as follows. Because the order of operation of the heating units can be controlled by the controller, waste can be treated under optimum conditions. If the controller controls the heating units so that the heating of the end portions of the heating chamber, which take a relatively long time to heat, will be started before the heating of the middle section of the heating chambers is started, the temperature difference between the middle section and the end portions when the heating of waste is started can be reduced. Accordingly, there will be no low-temperature area in the heating chamber where vaporized toxic substances are liable to survive the decomposition.

According to the sixth feature of the present invention, there is provided the toxic-substance treatment equipment according to the first or fourth feature. Baffle plates are provided on the ceiling of the heating chamber of the toxic-substance treatment equipment to control the flow of gas in the longitudinal directions of the heating chamber.

The advantage offered by the sixth feature of the present invention is as follows. Because the baffle plates retard the diffusion of vaporized toxic substances from the middle section toward the front and rear sections, the vaporized toxic substances are decomposed efficiently, without fail.

According to the seventh feature of the present invention, there is provided the toxic-substance treatment equipment according to the first or fourth feature. A ceramic layer is formed on the inside of the heating container of the toxic-substance treatment equipment and radiates heat from the heating means into the heating chamber.

The advantage offered by the seventh feature of the present invention is as follows. Because the heat from the heating means is efficiently fed into the heating chamber, the thermal efficiency of the toxic-substance treatment equipment is relatively high. Besides, as the ceramic layer is highly corrosion-resistant against toxic substances, the heating container is protected from the toxic substances in the heating chamber. Thus, the durability of the toxic-substance treatment equipment is high.

According to the eighth feature of the present invention, there is provided the toxic-substance treatment equipment according to the first or fourth feature. The toxic-substance treatment equipment further comprises a pressure-adjusting unit which feeds inert gas into the heating chamber and keeps the pressure in the heating chamber at a certain level.

The advantage offered by the eighth feature of the present invention is as follows. Because the pressure-adjusting unit feeds inert gas into the heating chamber when the gas in the heating chamber is cooled and the pressure in the heating chamber decreases after toxic substances are decomposed in the heating chamber. Thus, the pressure difference between the inside and the outside of the heating container can be reduced; accordingly, the strength required of the heating container is reduced; therefore, the production cost of the heating container can be reduced.

According to the ninth feature of the present invention, there is provided the toxic-substance treatment equipment according to the first or fourth feature. The toxic-substance treatment equipment further comprises a gas-treating means which detoxifies the gas discharged from the heating chamber.

The advantage offered by the ninth feature of the present invention is as follows. Because the gas discharged from the heating chamber is detoxified by the gas-treating means, the environment is not contaminated.

### Brief Description of Drawings

Fig. 1 is a schematic longitudinal sectional view of an embodiment of toxic-substance treatment equipment of the present invention.
Fig. 2 is a cross sectional view taken along the arrowed line II-II of Fig. 1.
Fig. 3 is the same cross sectional view as Fig. 2 except that the heating means is separated from the heating container in Fig. 2.
Fig. 4 (A) is a schematic longitudinal sectional view of the toxic-substance treatment equipment of Fig. 1 with the heating means fitted to the heating container. Fig. 4 (B) is a schematic longitudinal sectional view of the toxic-substance treatment equipment of Fig. 1 with the heating means separated from the heating container.

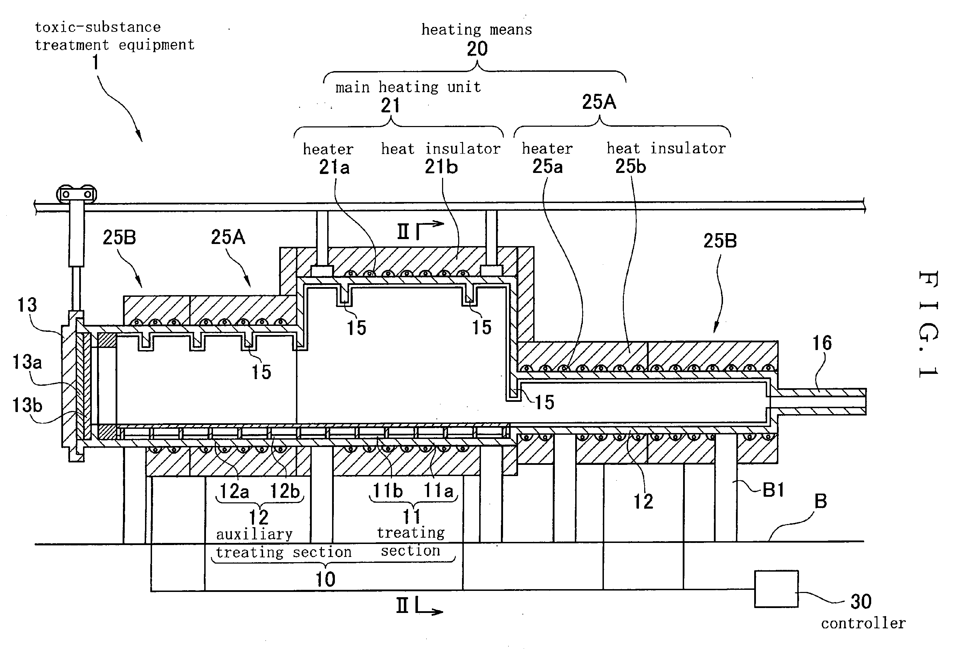

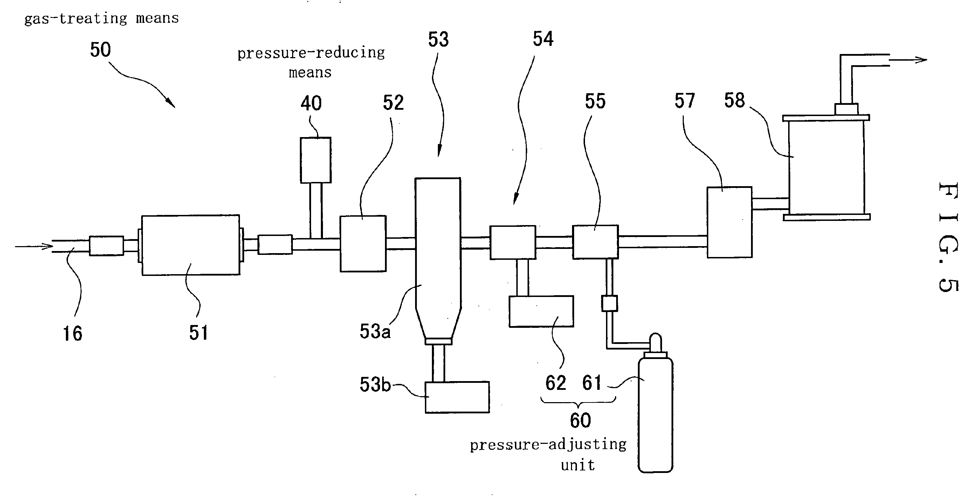

Fig. 5 is a schematic illustration of (i) an embodiment of pressure-reducing means of the present invention which sucks air out of the heating chamber of the toxic-substance treatment equipment of Fig. 1 to reduce the pressure in the heating chamber, (ii) an embodiment of pressure-adjusting unit of the present invention which feeds inert gas into the heating chamber of the toxic-substance treatment equipment of Fig. 1 and keeps the pressure in the heating chamber at a certain level, and (iii) an embodiment of gas-treating means of the present invention which treats and detoxifies the gas discharged from the heating container of the toxic-substance treatment equipment of Fig. 1.

### Best Mode for carrying out the Invention

By referring to the drawings, a preferred embodiment of toxic-substance treatment equipment of the present invention will be described below.

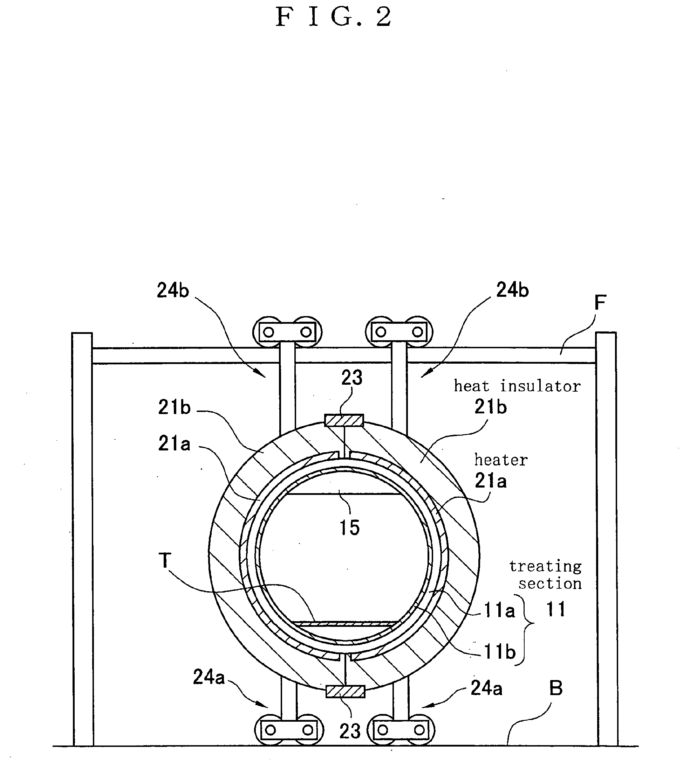

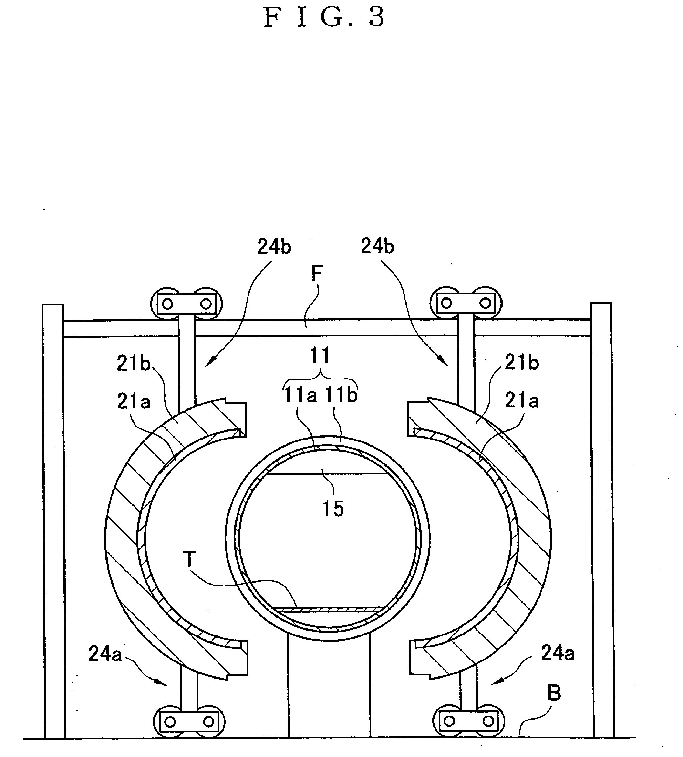

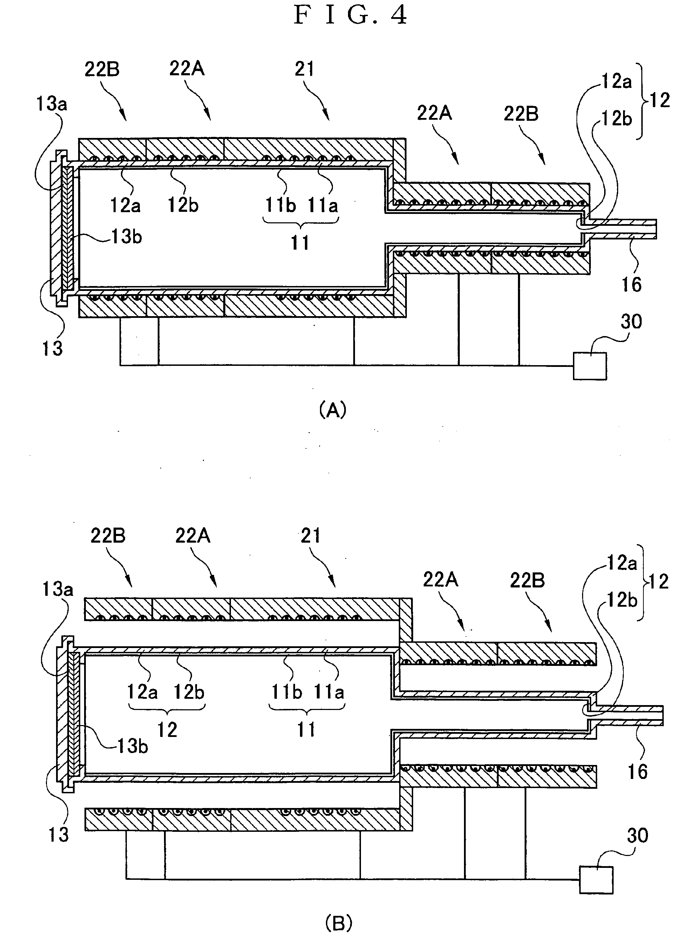

Fig. 1 is a schematic longitudinal sectional view of the toxic-substance treatment equipment 1 of the present invention. The reference numerals 10 and 20 are a heating container and a heating means, respectively. Fig. 2 is a cross sectional view taken along the arrowed line II-II of Fig. 1. Fig. 3 is the same cross sectional view as Fig. 2 except that the heating means 20 is separated from the heating container 10 in Fig. 3. Fig. 4 (A) is a schematic longitudinal sectional view of the toxic-substance treatment equipment 1 with the heating means 20 fitted to the heating container 10. Fig. 4 (B) is a schematic longitudinal sectional view of the toxic-substance treatment equipment 1 with the heating means 20 separated from the heating container 10. Fig. 5 is a schematic illustration of (i) an embodiment of pressure-reducing means 40 of the present invention which sucks air out of the heating chamber of the toxic-substance treatment equipment 1 to reduce the pressure in the heating chamber, (ii) an embodiment of pressure-adjusting unit 60 of the present invention which feeds inert gas into the heating chamber of the toxic-substance treatment equipment 1 and keeps the pressure in the heating chamber at a certain level, and (iii) an embodiment of gas-treating means 50 of the present invention which treats and detoxifies the gas discharged from the heating container 10 of the toxic-substance treatment equipment 1.

As shown in Figs. 1, 2, and 5, the toxic-substance treatment equipment 1 comprises the heating container 10, heating means 20, pressure-reducing means 40, and gas-treating means 50. The heating container 10 has a heating chamber to hold waste containing toxic substances. The heating means 20 heats the inside of the heating chamber of the heating container 10. The pressure-reducing means 40 sucks air out of the heating chamber of the heating container 10 to reduce the pressure in the heating chamber. The heating means 20 includes a main heating unit 21, a front auxiliary heating unit 25 in front of the main heating unit 21, and a rear auxiliary heating unit 25 in the rear of the main heating unit 21. The heating means 20 can be separated from and fitted onto the heating container 10.

First of all, the basic configuration of the toxic-substance treatment equipment 1 will be described below.

The heating container 10 is generally cylindrical. The heating container 10 is so supported by supports "B1" on a base "B" that it can move longitudinally. The heating container 10 has a main treating section 11, a front auxiliary treating section 12 in front of the main treating section 11, and a rear auxiliary treating section 12 in the rear of the main treating section 11. The heating container 10 has a port with an airtight cover 13 at its front end (its left end in Fig. 1) through which waste is put into the heating container 10 and treated waste is taken out from the heating container 10. The heating container 10 is made of a material, such as SUS310S, SUS304S, or HA270, which does not lose its durability while the heating container 10 is heated, for example up to 1,000°C, and cooled to normal temperature repeatedly over a long time period.

The reference sign "T" in Fig. 2 is a table on which waste is put. The table "T" may be given any configuration so long as waste can be put on it stably.

The heating means 20 is fitted onto the outside of the heating container 10. The heating means 20 includes heaters 21a and 25a and heat insulators 21b and 25b as shown in Fig. 1. The heating container 10 has a gas outlet at its rear end, and the pressure-reducing means 40 of Fig. 5, such as a vacuum pump, is connected to the gas outlet through a pipe 16.

Accordingly, toxic substances are decomposed in an atmosphere of a low density of oxygen without producing dioxin by (i) putting waste containing toxic substances into the heating container 10, (ii) closing the cover 13, (iii) sucking air out of the heating container 10 with the pressure-reducing means 40, and (iv) heating the waste over 800°C with the heating means 20.

Besides, as the heaters 21a and 25a are covered by the heat insulator 21b and 25b as shown in Fig. 1, the heaters 21 a and 25a heat the heating container 10 efficiently.

Moreover, as the heating container 10 is so supported by the supports "B1" on the base "B" that it can move longitudinally, it can freely expand when heated and contract when cooled.

The gas-treating means 50 is connected to the heating container 10 through the pipe 16. The gas-treating means 50 includes a secondary heating unit 51, a cooling tank 52, a carbide-decomposing tank 53, a mist-separator 54, a neutralizing tank 57, and an activated-carbon deodorizing tank 58 as shown in Fig. 5. The gas discharged from the heating container 10 goes through the gas-treating means 50 and is discharged into the atmosphere. Toxic substances contained in the gas from the heating container 10, which can be decomposed by heat, are decomposed by the secondary heating unit 51. Oils such as carbide and tar and water contained in the gas from the heating container 10 are removed from the gas by the mist-separator 54. Acid and alkaline substances are neutralized in the neutralizing tank 57. Foul odors, organic low-molecular-weight compounds after decomposition, and tar are removed from the gas in the activated-carbon deodorizing tank 58. Thus, the gas-treating means 50 detoxifies the gas discharged from the heating container 10 and, thereby, prevents the environment from being contaminated.

The constituent units 51 to 58 of the gas-treating means 50 may be arranged in different order from the order shown in Fig. 5. Besides, the gas-treating means 50 does not need to have all of the constituent units 51 to 58. Moreover, the gas-treating means 50 may include a dust collector, an oxidation-reduction catalytic device, etc.

As shown in Fig. 5, the toxic-substance treatment equipment 1 may be provided with a pressure-adjusting unit 60 to feed inert gas such as nitrogen to the heating container 10. The pressure-adjusting unit 60 includes a gas feeder 61, such as a gas cylinder, to feed inert gas to the heating container 10 and a valve 62 to control the feed of inert gas. With the pressure-adjusting unit 60, inert gas such as nitrogen can be fed to the heating container 10 while the gas in the heating container 10 is cooled down and the pressure inside the heating container 10 is decreasing after toxic substances are decomposed in the heating container 10. Thus, the pressure difference between the inside and the outside of the heating container 10 can be reduced; accordingly, the strength required of the heating container 10 is reduced; therefore, the production cost of the heating container 10 can be reduced. If a controller (not shown) is provided for controlling the valve 62 based on the gas pressure in the heating container 10, the gas pressure in the heating container 10 can be kept constant without fail.

Next, the heating means 20 will be described below.

As shown in Fig. 1, the heating means 20 includes the main heating unit 21 fitted to the main treating section 11 and the front and rear auxiliary heating unit 25 and 25 fitted to the front and rear auxiliary treating sections 12 and 12. The configurations of the front and rear auxiliary heating units 25 and 25 are substantially the same as the configuration of the main heating unit 21; therefore, only the configuration of the main heating unit 21 will be described below.

As shown in Figs. 2 and 3, the main heating unit 21 includes a heater 21a and an insulator 21b and divided into right and left halves. When the right and left halves of the main heating unit 21 is joined, they cover the outside of the main treating section 11. The right and left halves of the main heating unit 21 are provided with lower moving mechanisms 24a and 24a and upper moving mechanisms 24b and 24b so that they can be separated and joined.

Accordingly, when the right and left halves of the main heating unit 21 are fitted to the main treating section 11 and the right and left halves of the front and rear auxiliary heating units 25 and 25 are fitted to the front and rear auxiliary treating sections 12 and 12, respectively, the heating container 10 can be heated directly by the heating means 20, as shown in Figs. 1, 2, and 4 (A).

After the treatment of the waste in the heating container 10, the right and left halves of the main heating unit 21 and the front and rear auxiliary heating units 25 and 25 are separated; accordingly, the outside of the heating container 10 is exposed directly to the open air, as shown in Fig. 3 and Fig. 4 (B). Therefore, the heating container 10 is cooled in a relatively short time. Therefore, the waste-treating cycle of the toxic-substance treatment equipment 1 is relatively short and, hence, the toxic-substance treatment equipment 1 treats waste relatively efficiently.

The reference numerals 23 and 23 are insulating members, which are made of heat-resisting rubber, heat-resisting material, fire-resisting material, or the like and prevent heat from escaping through the joints of the main heating unit 21.

Besides, as shown in Figs. 1 and 4, the main heating unit 21 and the front and rear auxiliary heating units 25 and 25 are connected to a controller 30. The controller 30 controls the starting times of heating by the heating units 21, 25, and 25, their respective heating intensities, etc. in accordance with the temperature, pressure, gas-producing rate, etc. in the heating container 10.

Because the necessary time for the front and rear auxiliary heating units 25 and 25 to heat the front and rear auxiliary treating sections 12 and 12 up to desired temperature is longer than the time for the main heating unit 21 to heat the main treating section 11 up to the same temperature, the controller 30 switches on the front and rear auxiliary heating units 25 and 25 first and then the main heating unit 21 so that the main and auxiliary treating sections 11, 12, and 12 can reach the desired temperature almost simultaneously. Accordingly, if toxic substances vaporized in the main treating section 11 flow into the front and rear auxiliary treating sections 12 and 12, the toxic substance can be decomposed in the auxiliary treating sections 12 and 12. Thus, vaporized toxic substances are prevented from surviving decomposition in relatively low-temperature areas which might be created in the heating container 10 if the differential heating were not available. Thus, waste can be treated efficiently.

More specifically, the controller 30 switches on the front and rear auxiliary heating units 25 and 25 first. When the temperature in the front and rear auxiliary treating sections 12 and 12 reaches, for example, 600-800°C, the controller 30 switches on the main heating unit 21 so that the auxiliary and main treating sections 12, 12, and 21 reach, for example, 800-1,000°C simultaneously and, thereby, toxic substances are prevented from surviving decomposition in relatively low-temperature areas which might be created in the heating container 10 if the differential heating were not available.

Any heating procedures other than the above one may be adopted as long as waste can be treated under optimum conditions.

Besides, if each of the front and rear auxiliary heating units 25 and 25 includes two heating subunits 25A and 25B, the temperature in the heating container 10 can be controlled more suitably.

The heating container 10 is constructed as described below for efficient treatment of waste.

As shown in Figs. 1 and 2, baffle plates 15 are provided on the ceiling of the heating chamber to retard the diffusion of vaporized toxic substances from the main treating section 11 toward the front and rear ends of the heating container 10 so that the toxic substances can be decomposed efficiently, without fail.

If baffle plates 15 are provided between the main treating section 11 and the auxiliary treating sections 12 and 12, they retard the diffusion of vaporized toxic substances from the main treating section 11 into the front and rear auxiliary treating sections 12 and 12 whose temperature would be lower than the temperature of the main treating section 11 if the above differential heating were not available.

Besides, the main treating section 11 is taller than the front and rear auxiliary treating sections 12 and 12 as shown in Fig. 1; accordingly, vaporized toxic substances lighter than air can be kept in the main treating section 11 without fail.

The main treating section 11 comprises a wall 11a and a ceramic layer 11b formed on the inside of the wall 11a. Each of the front and rear auxiliary treating sections 12 and 12 comprises a wall 12a and a ceramic layer 12b formed on the inside of the wall 12a. Accordingly, heat from the heaters 21a and 25a can efficiently be fed into the heating chamber of the heating container 10. More specifically, the ceramic layers 11b and 12 b are heated up by heat from the heaters 21 a and 25a through the wall 11a and 12a and radiate far-infrared rays toward the waste in the heating chamber. Thus, heat from the heating means 20 can efficiently be transmitted to waste in the heating chamber. Besides, the ceramic layers 11b and 12b serve as heat-insulating layers, preventing the heat in the heating chamber from escaping from the heating chamber. Thus, the thermal efficiency of the toxic-substance treatment equipment 1 is further improved.

Moreover, because the ceramic layers 11b and 12b are highly corrosion-resistant against toxic substances such as acid, alkali, and metallic ions, the walls 11a and 12a are protected from the toxic substances in the heating chamber. Thus, various toxic substances can be decomposed in the toxic-substance treatment equipment 1 and the durability of the toxic-substance treatment equipment 1 is high.

If ceramic layers 11b and 12b are formed by applying liquid ceramic material containing a compound of silicon oxide and aluminum oxide (for example, CERAC-α made by CERAMISSION CO., LTD) to the walls 11a and 12b, ceramic layers 11b and 12b can be formed easily and, hence, the production cost of the toxic-substance treatment equipment 1 can be held down. Besides, the compatibility between the walls 11a and 12a and the ceramic layers 11b and 12b is improved. When the main and auxiliary treating sections 11 and 12 expand and contract thermally, the ceramic layers 11b and 12b expand and contract in accordance with the expansion and contraction of the main and auxiliary treating sections 11 and 12. Accordingly, the ceramic layers 11b and 12b does not peel off or crack; therefore, the toxic-substance treatment equipment 1 has high durability and requires less maintenance, which holds down the running cost.

If a refractory 13a made of ceramic material, clay, cement, or the like is provided on the inside of the cover 13 as shown in Fig. 1, the temperature of the cover 13 is held down and the airtightness of the cover 13 is not disturbed. If a shielding member 13b such as an inner cover of metal or packing of copper or ceramic material is provided on the inside of the refractory 13a as shown in Fig. 1, the airtightness of the cover 13 is further improved.

### Industrial Applicability

The toxic-substance treatment equipment of the present invention can be used for the treatment of substances, such as waste containing plastic, which produces dioxin when incinerated, the treatment of insulating oil containing PCB, and the detoxification of substances contaminated by dioxin. Besides, the toxic-substance treatment equipment of the present invention can be used for the treatment of various substances which produce various toxic substances other than dioxin when incinerated and the treatment of various other substances.

## Claims

1. Toxic-substance treatment equipment comprising:
a heating container which has a heating chamber to hold waste containing toxic substances;
a pressure-reducing means which sucks air out of the heating chamber to reduce the pressure in the heating chamber; and
a heating means which heats the inside of the heating chamber,
the heating container being cylindrical, the heating means including a plurality of heating units disposed longitudinally of the heating container and a controller to control the order of operation of the heating units.

2. The toxic-substance treatment equipment according to claim 1, wherein:
the heating container includes
a main treating section wherein waste to be treated is put,
a front auxiliary treating section which is disposed in front of the main treating section, and
a rear auxiliary treating section which is disposed in the rear of the main treating section; and
the heating means includes
a main heating unit to heat the main treating section,
a front auxiliary heating unit to heat the front auxiliary treating section, and
a rear auxiliary heating unit to heat the rear auxiliary treating section.

3. The toxic-substance treatment equipment according to claim 1, wherein the heating means (i) is cylindrical and fitted onto the outside of the cylindrical heating container, (ii) includes a plurality of cylindrical heaters and a plurality of cylindrical heat insulators, the insides of the cylindrical heaters being in contact with the outside of the cylindrical heating container, the outsides of the cylindrical heaters being covered by the cylindrical heat insulators, and (iii) is separable from the cylindrical heating container.

4. Toxic-substance treatment equipment comprising:
a heating container which has a heating chamber to hold waste containing toxic substances;
a pressure-reducing means which sucks air out of the heating chamber to reduce the pressure in the heating chamber; and
a heating means which heats the inside of the heating chamber,
the heating means (i) being fitted onto the outside of the heating container, (ii) including at least one heater and at least one heat insulator, the inside of said at least one heater being in contact with the outside of the heating container, the outside of said at least one heater being covered by said at least one heat insulator, and (iii) being separable from the heating container.

5. The toxic-substance treatment equipment according to claim 4, wherein the heating container is cylindrical and the heating means includes a plurality of heating units disposed longitudinally of the heating container and a controller to control the order of operation of the heating units.

6. The toxic-substance treatment equipment according to claim 1 or 4, wherein baffle plates are provided on the ceiling of the heating chamber to control the flow of gas in the longitudinal directions of the heating chamber.

7. The toxic-substance treatment equipment according to claim 1 or 4, wherein a ceramic layer is formed on the inside of the heating container and radiates heat from the heating means into the heating chamber.

8. The toxic-substance treatment equipment according to claim 1 or 4, further comprising a pressure-adjusting unit which feeds inert gas into the heating chamber and keeps the pressure in the heating chamber at a certain level.

9. The toxic-substance treatment equipment according to claim 1 or 4, further comprising a gas-treating means which detoxifies the gas discharged from the heating chamber.
